# EUROPÄISCHE PATENTSCHRIFT

(11) **EP 3 323 718 B1**
(45) Veröffentlichungstag und Bekanntmachung des Hinweises auf die Patenterteilung: **18.09.2019**
(21) Anmeldenummer: 17199946.9
(22) Anmeldetag: 03.11.2017
(51) Int. Cl.: B64C 27/12, F16H 1/02

(54) **HELIKOPTERROTORGETRIEBE**
HELICOPTER ROTOR GEARBOX
BOÎTE DE TRANSMISSION POUR ROTOR D'HÉLICOPTÈRE

(30) Priorität: 21.11.2016 CH 15362016
(43) Veröffentlichungstag der Anmeldung: 23.05.2018
(73) Patentinhaber: kopter group ag, 8753 Mollis (CH)
(72) Erfinder: KÖSTLI, Roman, 8335 Hittnau (CH); STUCKI, Martin, 8330 Pfäffikon ZH (CH)
(74) Vertreter: Schneider Feldmann AG Patent- und Markenanwälte

(56) Entgegenhaltungen:
- WO-A1-98/16762
- CH-A- 256 401
- US-A- 4 251 987

## Beschreibung

### Technisches Gebiet

Die vorliegende Erfindung beschreibt ein Helikopterrotorgetriebe mit einem Getriebegehäuse, in welchem mindestens ein zentrales Antriebszahnrad von mindestens einem Antriebsstrang rotierbar gelagert ist, wobei durch das Antriebszahnrad indirekt eine Mehrzahl von Planetenrädern auf zugehörigen Planetenradachsen definierenden Planetenradträgern angeordnet rotierbar gelagert sind, wodurch ein rotierbarer Rotormast um eine zentrische Achse bzw. Rotormastachse mittels Helikoptergetriebes rotierbar antreibbar ist.

### Stand der Technik

Im Bereich Helikopterbau werden Hauptrotor und Heckrotor in der Regel mittels Helikopterrotorgetriebe, üblicherweise in Form eines Planetengetriebes angetrieben. Ein solches Helikoptergetriebe ist in einem Getriebegehäuse untergebracht. Das Getriebegehäuse ist an mehreren Stellen an der Tragstruktur des Helikopters befestigt und an einen Rotor gekoppelt. Diese Art Helikopterrotorgetriebe hat sich durchgesetzt, da eine kompakte, äusserst zuverlässige und gewichtsparende Bauweise möglich ist.

Planetengetriebe sind bekannt und bei Verwendung als Helikopterrotorgetriebe weisen diese Planetengetriebe eine Mehrzahl von aussenverzahnten Planetenrädern auf, welche auf zugehörigen Planetenträgern lagern. Die Planetenräder sind konstruktionsbedingt in einem örtlich fixierten Zahnradring, in Form eines innenverzahnten Hohlrades, rotierbar um sich selbst und innerhalb des Hohlrades gelagert. Dabei rotieren die Planetenräder jeweils um ihre Planetenachse und drehen innerhalb des Zahnradringes um eine zentrale Rotorachse. Die Rotation der Planetenräder erfolgt durch rotativen Antrieb eines zentralen Sonnenrades, welches ebenfalls örtlich fixiert, aber rotierbar um die zentrale Rotorachse gelagert ist. Ein Antrieb dreht das zentrale Sonnenrad, sodass die Rotationsbewegung über das Sonnenrad und die Planetenräder auf den Rotormast übertragen wird, wobei der Rotormast von der, der Antriebsseite abgewandten Seite des Getriebegehäuses wegragt. Mit dieser bekannten Anordnung sind kompakte, leichte, ausreichend leistungsfähige und robuste Helikopterrotorgetriebe zum Antrieb verschiedener Rotormasten erreichbar.

In der Praxis hat sich aber gezeigt, dass diese Art Helikopterrotorgetriebe einen erhöhten Wartungsaufwand benötigt. Insbesondere die Schmierung muss ausreichend oft kontrolliert und nachgeführt werden. Da im Bereich Helikopter möglichst viel Gewicht eingespart werden muss, wird möglichst auf zusätzliche Vorrichtungen zur automatischen Schmierung, zur Steuerung einer automatischen Schmierung bzw. zur aufwändigen Rückführung und Wiederverwendung von Schmierstoff verzichtet. Entsprechend muss die ausreichende Schmierung der bewegten Bauteile in regelmässigen Abständen überprüft und manuell nachgeführt werden. Die bislang bekannten Helikopterrotorgetriebe sind heute nach wenigen Flugstunden bereits wieder zu warten bzw. wieder Instand zu setzen, was mit Umstand und Kosten verbunden ist.

Die Schmierung bekannter Helikopterrotorgetriebe wurde bereits durch den Einsatz unterschiedlicher Schmierstoffe optimiert, wobei auch halbautomatische Einzelschmierverfahren versucht wurden. Auch ist versucht worden den Wartungsaufwand durch eine Zentralschmierung zu verringern. All diese Bemühungen haben aber noch nicht zum gewünschten deutlich reduzierten Wartungsaufwand derartiger Helikopterrotorgetriebe geführt. Es besteht der Wunsch die Schmierung des Helikopterrotorgetriebes zu vereinfachen, was aufgrund der schlechten Zugänglichkeit des Helikopterrotorgetriebes nicht einfach möglich war.

Aus dem Dokument CH 256 401 A ist beispielsweise ein als Planetengetriebe ausgestaltetes Helikopterrotorgetriebe bekannt mit einem zentralen Hohlraum, in welchem ein örtlich fixierter und drehgesicherter Lagermast verläuft.

### Darstellung der Erfindung

Die vorliegende Erfindung hat sich zur Aufgabe gestellt ein kompaktes wenige Bauteile umfassendes und leichtes Helikopterrotorgetriebe zu schaffen, dessen Wartungsaufwand verringert ist, indem eine für einen längeren Zeitraum aufrechterhaltende Schmierung erreicht wird. Es war Aufgabe der Erfindung ein Helikopterrotorgetriebe mit im Vergleich zum Stand der Technik deutlich verlängerten Wartungsintervallen bzw. Schmiermittelnachführintervallen zu schaffen.

Dies wird mit einem Helikopterrotorgetriebe gemäss Patentanspruch 1 gelöst, wobei zusätzlich die Betriebssicherheit des Helikopterrotorgetriebes erhöht und letztlich die Lebensdauer des Helikopterrotorgetriebes noch gesteigert wird. Durch die spezielle Ausgestaltung des Helikopterrotorgetriebes wird die Schmierung erleichtert und die Wartungsintervalle werden verlängert.

Zusätzlich konnte ein äusserst kompaktes Helikoptergetriebe erreicht werden, welches die Durchführung von Verkabelungen, Steuerstangen und weiteren Bauteilen von der Antriebsstrangseite zur Rotorseite wie nachfolgend erläutert erlaubt.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben.
- Figur 1: zeigt einen Längsschnitt durch ein Helikopterrotorgetriebe im montierten Zustand.
- Figur 2: zeigt eine schematische Ansicht des Helikoptergetriebes bei entferntem Getriebegehäuse nach Montage auf dem Lagermast, vor der Montage des Zahnradmitnehmers.
- Figur 3: zeigt einen Längsschnitt durch das Helikopterrotorgetriebe, wobei das Getriebegehäuse und der Gehäusedeckel rotormastseitig weggelassen wurde.
- Figur 4: zeigt eine Schnittansicht durch den rotormastseitigen Teil des Helikoptergetriebes mit Detailansicht des Zahnradmitnehmers und der Befestigung am Rotormast.
- Figur 5a: zeigt eine perspektivische Ansicht des Zahnradmitnehmers mit Kreuzverzahnung, während
- Figur 5b: eine perspektivische Ansicht des Rotormast-/Zahnradringflansches mit Kreuzverzahnung zeigt.
- Figur 6: zeigt einen Längsschnitt durch eine weitere bevorzugte Ausführungsform eines Helikoptergetriebes in montiertem Zustand.

Im Folgenden wird ein Helikopterrotorgetriebe 1 beschrieben, welches in Form eines Planetengetriebes ausgeführt ist und für den Antrieb eines Hauptrotors oder eines Heckrotors einsetzbar ist. Damit kann das hier vorgestellte Helikopterrotorgetriebe 1 als Hauptgetriebe, in der Fachsprache "main gear box" genannt im Helikopterbau verwendet werden.

Das Helikopterrotorgetriebe 1 wird von einem Getriebegehäuse 10 umschlossen, womit die verschiedenen Bauteile geschützt vor äusseren Einflüssen gehalten werden. Mittels mindestens einer Getriebegehäusebefestigung 100 ist das Getriebegehäuse 10 an einer nicht dargestellten Helikoptertragstuktur befestigbar. Das Getriebegehäuse 10 ist mit einem Gehäusedeckel 101 abgeschlossen, welcher hier gestrichelt schematisch angedeutet ist.

Das Helikopterrotorgetriebe 1 weist einen zentralen Hohlraum auf. In diesem zentralen Hohlraum ist ein ortsfester und drehfester Lagermast 13 gelagert, welcher hier als Hohlkörper eine zentrische Achse Z umschliessend gestaltet ist. Die zentrische Achse Z bildet gleichzeitig die Längsrichtung des Lagermastes 13 und eine Rotationsachse eines Rotormastes 14, welche auch als Rotormastachse bezeichnet wird. Der Lagermast 13 kann unterschiedlich lang in Längsrichtung entlang der zentrischen Achse Z verlaufend ausgestaltet sein, wobei er mindestens teilweise durch das Zentrum des Getriebegehäuses 10 verläuft. Hier ist der Lagermast 13 das Getriebegehäuse 10 vollständig querend ausgestaltet, wobei durch den zentrischen Hohlraum im Lagermast 13 im Wesentlichen entlang der Rotormastachse beispielsweise nicht dargestellte Steuerstangen oder elektrische Leitungen wie Kabel oder dergleichen durchführbar sind. Durch eine solche Verlagerung in den Lagermast können verglichen mit einer Anordnung ausserhalb des Rotormasts die Steuerstangen oder Kabel durch äussere Einflüsse wie Vogelschlag etc. nicht beschädigt werden. Vorzugsweise ist antriebsstrangseitig am Getriebegehäuse eine Umlenkvorrichtung zum Umlenken und Ausrichten der Steuerstangen angeordnet.

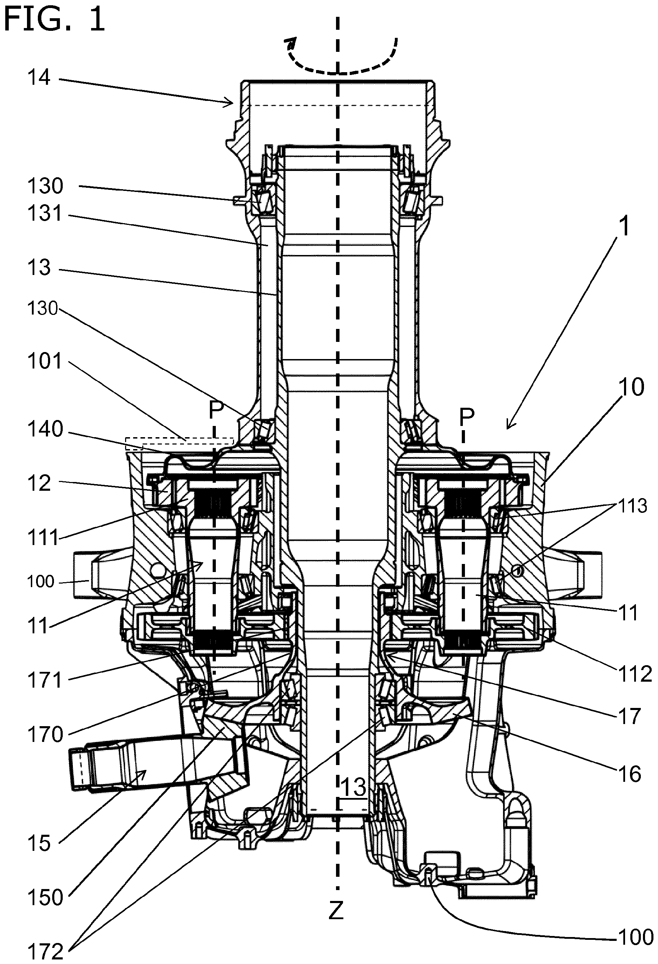

Wie im Weiteren in Fig.1 ersichtlich ist hier der Lagermast 13 von der Rotorseite in Richtung Antriebsstrangseite verjüngend ausgestaltet, wodurch der Lagermast 13 von der Rotorseite her in den zentrischen Hohlraum des Getriebegehäuses 10 eingelassen und im Getriebegehäuse 10 befestigt werden kann.

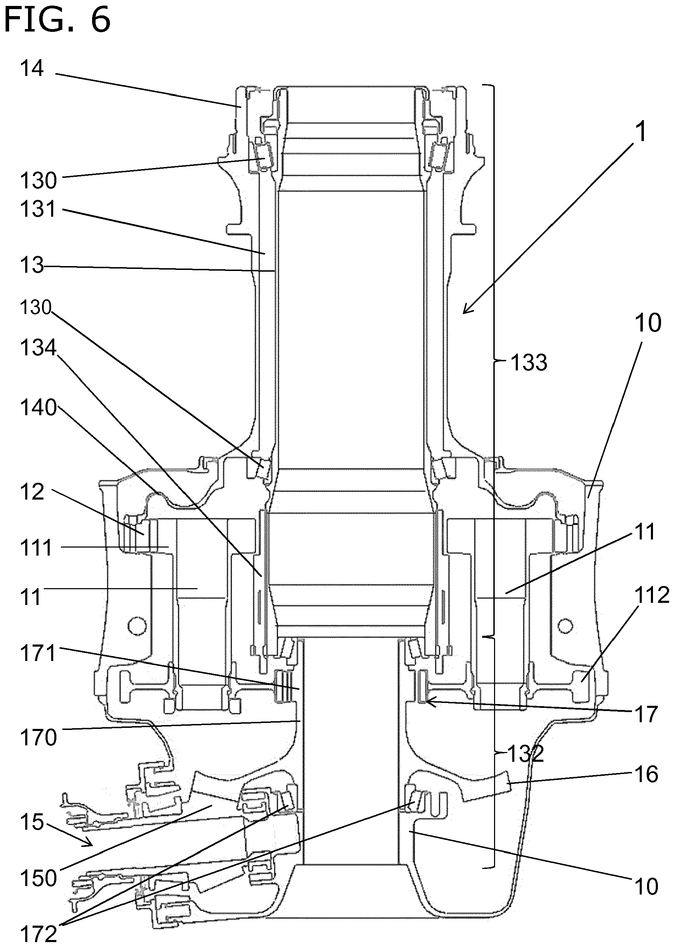

Am Lagermast 13 ist hier gemäss Fig.1 ein Antriebszahnrad 16 drehbar gelagert, wobei das Antriebszahnrad 16 hier eine Kegelradverzahnung mit einer Schrägverzahnung aufweist, welche mit mindestens einem Antriebsstrangzahnrad 150 mindestens eines Antriebsstranges 15 zusammenwirken kann. Alternativ zu einer Schrägverzahnung kann das Antriebszahnrad eine Spiralverzahnung aufweisen. Mit dem Antriebszahnrad 16 ist ein als Hohlwelle ausgebildetes Sonnenrad 17 verbunden, welches einen Rohrabschnitt 170 mit einer beispielsweise gerade verzahnten Aussenverzahnung 171 aufweist. Durch das Sonnenrad 17 ist das Antriebszahnrad 16 rotierbar um die zentrische Achse Z auf den örtlich und rotativ fixierten Lagermast 13 aufgesteckt gelagert. Das Sonnenrad 17 ist - wie hier in Fig.1 gezeigt - auf zwei Sonnenradlagern 172 rotierbar auf dem beziehungsweise um den Lagermast 13 gelagert. Durch den Antriebsstrang 15 ist das Sonnenrad 17 antreibbar, wodurch der Sonnenrad 17 eine treibende Hohlwelle darstellt. Alternativ oder zusätzlich zu solchen zwischen Lagermast 13 und Sonnenrad 17 angeordneten Sonnenradlagern 172 kann das Sonnenrad 17 mittels weiteren zwischen Getriebegehäuse 10 und Sonnenrad 17 geeignet platzierten Sonnenradlagern 172 rotierbar um den Lagermast 13 gelagert sein (siehe Fig.6).

Auf Höhe der Aussenverzahnung 171 des Sonnenrads 17 ist eine Mehrzahl von Antriebsplanetenrädern 112 auf zugehörigen Planetenradträgern 11 beispielsweise mittels einer Keilverzahnung angeordnet, wobei die Planetenradträger 11 als Planetenwellen aufgefasst werden können. Die Antriebsplanetenräder 112 weisen jeweils eine Aussenverzahnung auf und sind mit der Aussenverzahnung 171 des Sonnenrads 17 in Eingriff.

Die Planetenradträger 11 sind ortsfest ausgestaltet und weisen einen Abstand zum Getriebegehäuse 10 bzw. zur zentrischen Achse Z bzw. zum rotierbaren Sonnenrad 17 auf, dass die Antriebsplanetenräder 112 und ihre Planetenradträger 11 in eine ortsfeste Rotation innerhalb des Getriebegehäuses 10 versetzt werden können. Damit eine möglichst reibungsfreie Rotation der Planetenradträger 11 erreicht wird, sind mindestens zwei Planetenradträgerlager 113 in Richtung einer Planetenradachse P beabstandet zwischen den Wänden des Getriebegehäuses 10 und den Planetenradträgern 11 angeordnet.

Die Planetenradträger 11 sind als Doppelplanetenradträger ausgestaltet, da zu jedem Antriebsplanetenrad 112 in Richtung Planetenradachse P beabstandet ein Planetenrad 111 an jedem Planetenradträger 11 angeordnet ist. Die Antriebsplanetenräder 112 sind jeweils parallel zu den zugehörigen Planetenrädern 111 angeordnet. Die Mehrzahl Planetenradträger 11 ist um die zentrische Achse Z, um den äusseren Umfang des Lagermastes 13 verteilt und ortsfest im Getriebegehäuse 10 angeordnet. Die Planetenräder 111 bzw. die Antriebsplanetenräder 112 aller Planetenradträger 11 haben dabei ausreichend Spiel zu den Wänden des Getriebegehäuses 10 und zum orts- und drehfesten Lagermast 13. Damit ist eine ungestörte Rotation der Planetenradträger 11 und damit der Planetenräder 111, jeweils um ihre Planetenradachsen P möglich.

Das hier gezeigte Helikopterrotorgetriebe 1 kann als ein zweistufiges Planetengetriebe aufgefasst werden, weshalb gemäss dem erfindungsgemässen Helikopterrotorgetriebe 1 eine um den örtlich fixierten und drehgesicherten Lagermast 13 rotierbar gelagerte Hohlwelle als Sonnenrad 17 fungiert. Der Lagermast 13 quert hier das Getriebegehäuse 10 vollständig und ragt aus dem Getriebegehäuse 10 auf der dem Antriebsstrang 15 abgewandten Seite heraus.

Auf Höhe der Planetenräder 111 in Richtung zentrischer Achse Z ist ein Zahnradring 12 rotierbar um die zentrische Achse Z angeordnet. Der Zahnradring 12 umschliesst alle Planetenräder 111, ist durch die Rotation der Planetenräder 111 antreibbar und ist damit um die Planetenräder 111, die zentrische Achse Z und gemäss der gezeigten Ausführungsform, den äusseren Umfang des Lagermasten 13 umschliessend rotierbar.

Am Zahnradring 12 ist ein Zahnradringmitnehmer 140 angeordnet, mittels welchem die Rotation des Zahnradringes 12 auf den drehbaren Rotormast 14 übertragbar ist. Der Gehäusedeckel 101 schliesst das Getriebegehäuse 10 den Zahnradringmitnehmer 140 umhüllend ab. Der Gehäusedeckel 101 ist dazu am Getriebegehäuse 10 befestigt und ragt bis kurz vor den rotierbaren Rotormast 14. Damit ist der Gehäusedeckel 101 rotormastseitig nicht befestigt, sodass der Rotormast 14 problemlos rotierbar ist.

Der Rotormast 14 ist rohrförmig ausgebildet und hier über den, aus dem Getriebegehäuse 10 herausragenden Teil des Lagermasts 13, gestülpt konzentrisch ausgerichtet rotierbar gelagert. Damit fluchten die Längsachsen beider Masten 13, 14, wobei nur der Rotormast um die Achse Z rotiert.

Der Rotormast 14 ist als Hohlwelle ausgebildet und bildet eine Abtriebswelle, welche indirekt mittels Helikopterrotorgetriebe 1 durch den Antriebsstrang 15 antreibbar ist. An der vom Helikoptergetriebe 1 entgegengesetzten Seite des Rotormastes 14 wird ein Rotorkopf, umfassend mehrere Rotorblätter befestigt. Zur Lagerung des Rotormastes 14 sind weitere Lager 130 zwischen Lagermast 13 und Rotormast 14 vorgesehen, hier im Verlauf der zentrischen Achse Z zwei voneinander beabstandete Lager 130. Zwischen Lagermast 13 und Rotormast 14 ist ein Hohlraum 131 ausgebildet, in welchem vorzugweise ein Rohr zum Fördern in Richtung Rotorseite von Schmieröl für die Lager 130 angeordnet werden kann.

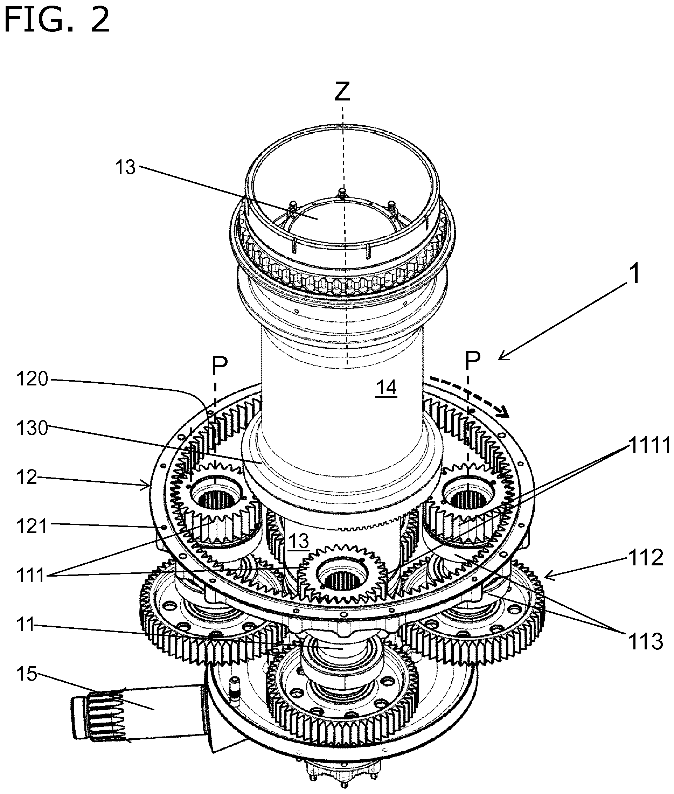

In Figur 2 ist die Rotation des Zahnradringes 12 um die Aussenkonturen der Planetenräder 111 mit dem Pfeil oben im Bild angedeutet. Während die Planetenräder 111 und die Planetenradträger 11 ortsfest rotieren, läuft der Zahnradring 12 um die zentrische Achse Z. Am Zahnradring 12 ist eine Innenverzahnung 120 angeordnet, welche mit einer Aussenverzahnung 1111 aller Planetenräder 111 in Eingriff ist. Der Zahnradring 12 rotiert in dieser Ausführungsform, sodass die Planetenräder 111 ortsfest gelagert sind. Durch Befestigungsmittel 121, beispielsweise Durchgangslöcher oder Gewindelöcher und passende Schrauben, kann der Zahnradmitnehmer 140 am rotierbaren Zahnradring 12 befestigt werden. Die Befestigungsmittel 121 sind hier auf einer in Richtung der zentrischen Achse Z weisenden Fläche, vom Lagermast 13 beabstandet, entlang des Umfangs verteilt angeordnet. Ein Lager 130 zwischen Lagermast 13 und dem nicht dargestellten Rotormast 14 ist den fixierten Lagermast 13 umgebend dargestellt.

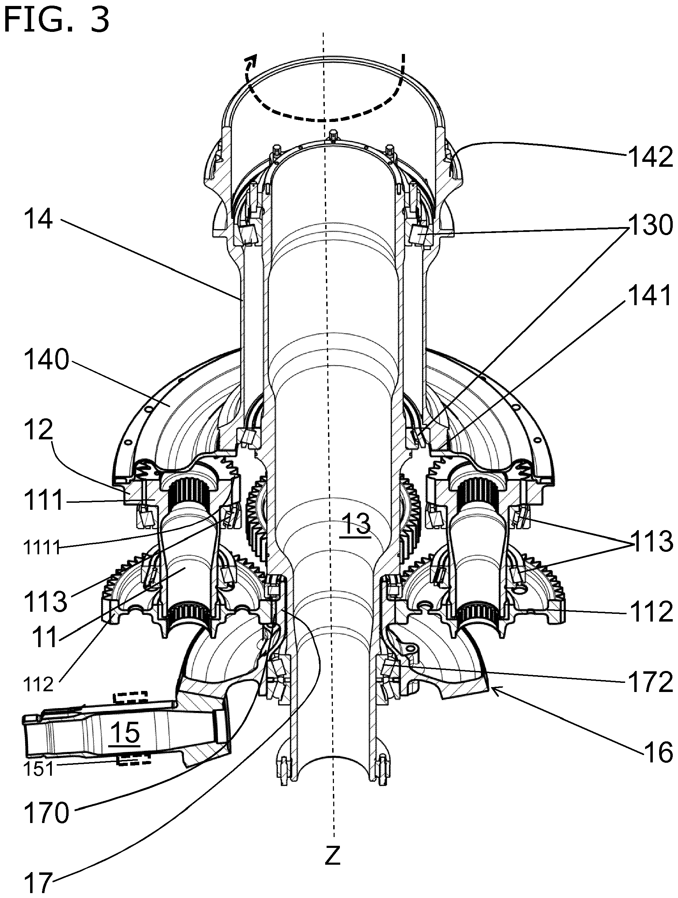

Der Längsschnitt durch das Helikoptergetriebe 1 samt Lagermast 13 und Rotormast 14 gemäss Figur 3 erlaubt bei entferntem Gehäusedeckel 101 einen Einblick in die Ausgestaltung des Zahnradringmitnehmers 140 und die Verbindung zum Rotormast 14. Der Zahnradringmitnehmer 140 ist haubenartig ausgebildet, wodurch eine Berührung des Zahnradringmitnehmers 140 mit den Planetenrädern 111 ausgeschlossen ist. Der Zahnradringmitnehmer 140 ist auf einer Seite mit dem Zahnradring 12 und auf der, der zentrischen Achse Z zugewandten Seite mit dem Rotormast 14 verbunden. Die Ausgestaltung des Zahnradringmitnehmers 140 sollte möglichst leicht aber ausreichend stabil erfolgen, entsprechend bildet hier ein ringförmiges, haubenartiges beziehungsweise haubenförmiges Bauteil aus Stahl, Titan oder dergleichen mit einer Wandstärke von vorzugsweise 2 bis 12 mm, noch bevorzugter 3 bis 8 mm mit diesen Eigenschaften den Zahnradringmitnehmer 140.

Alternativ kann der Rotormast 14 und der Zahnradringmitnehmer 140 als ein einziges einstückiges Bauteil gefertigt sein (siehe Fig.6).

Durch den Antriebsstrang 15, welcher mittels Antriebsstranglager 151 gelagert ist, wird das Antriebszahnrad 16 rotiert. Durch die resultierende Rotation des mit dem Antriebszahnrad 16 verbundenen Sonnenrads 17 und der damit verbundenen Aussenverzahnung 171 wird die Rotation auf die Antriebsplanetenräder 112 und damit die Planetenräder 111 übertragen, wobei dies als erste Stufe des vorliegenden zweistufigen Planetengetriebes aufgefasst werden kann. Die Planetenräder 111 übertragen dabei in einer zweiten Stufe die Kräfte auf die Innenverzahnung 120 des Zahnradringes 12 und die dadurch resultierende Rotation des Zahnradringes 12 um die zentrische Achse Z wird mittels Zahnradringmitnehmer 140 auf den Rotormast 14, welcher aus dem Getriebegehäuse 10 heraus ragt, übertragen. Das Drehmoment vom Zahnradring 12 wird damit mittels Zahnradmitnehmer 140 auf den Rotormast 14 übertragen.

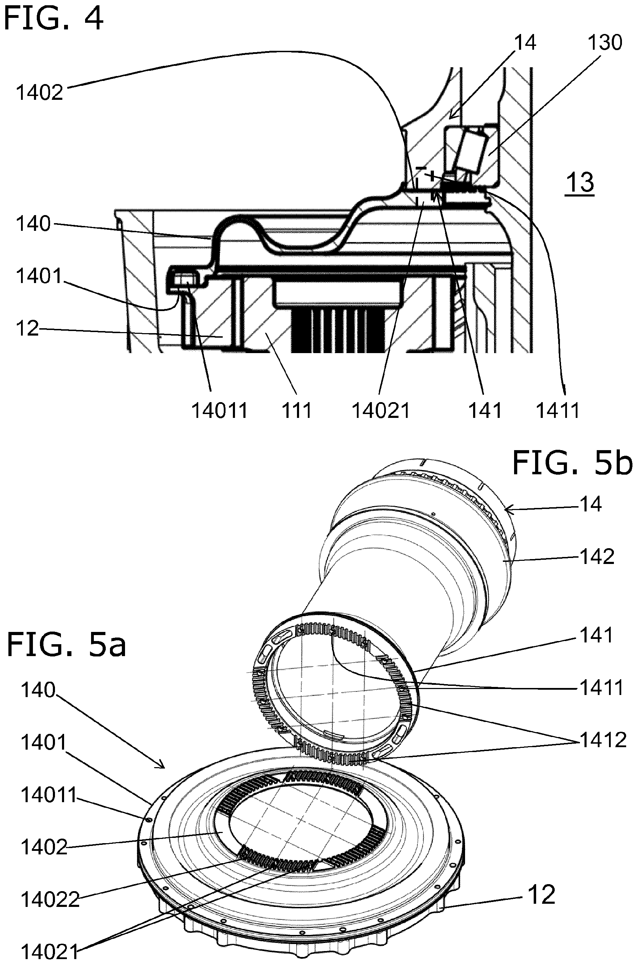

Der Rotormast 14 weist einen Rotormast-/Zahnradringflansch 141 und einen Rotorkoppelflansch 142 auf. In Figur 4 ist nochmals die Befestigung des Zahnradringmitnehmers 140 am Zahnradring 12 und am Rotormast 14 im Detail gezeigt. Im Aussenflansch 1401 des Zahnradringmitnehmers 140 ist wie in Fig.5a ersichtlich eine Mehrzahl von Durchgangslöchern 14011 eingeformt, wobei mittels passender die Durchgangslöcher 14011 querender Schrauben der Zahnradringmitnehmer 140 mit dem Aussenflansch 1401 an korrespondierenden Befestigungsmitteln (siehe Fig.2) des Zahnradrings 12 befestigbar ist und damit mitrotierbar lagerbar ist. Alternativ oder zusätzlich zu einer solchen Schraubverbindung zwischen Aussenflansch 1401 und Zahnradring 12 können die in Kontakt zu bringenden Flächen des Zahnradrings 12 und des Aussenflansches 1401 des Zahnradringmitnehmers 140 jeweils mit einer zusätzlichen korrespondierenden Verzahnung bzw. Kreuzverzahnung versehen sein.

An der dem Aussenflansch 1401 abgewandten Seite ist ein Innenflansch 1402 am Zahnradringmitnehmer 140 angeformt, welcher eine Mehrzahl von Durchgangslöchern 14021 (gestrichelt angedeutet) aufweist. Mittels Schrauben, die die Durchgangslöcher 14021 und ausgesparte Sacklöcher 1411 (gestrichelt angedeutet) im Rotormast-/Zahnradringflansch 141 queren, wird der Zahnradringmitnehmer 140 am Rotormast 14 befestigt.

Wie Versuche gezeigt haben, kann die Drehmomentübertragung vom Zahnradring 12 bzw. dem Zahnradringmitnehmer 140 auf den Rotormast 14 verbessert und gesichert werden. Dazu wird eine zusätzliche formschlüssige Verbindung zwischen Rotormast-/Zahnradringflansch 141 und Innenflansch 1402 des Zahnradringmitnehmers 140 eingeführt. Dazu werden die in Kontakt zu bringenden Flächen des Rotormast-/Zahnradringflansches 141 und des Innenflansches 1402 jeweils mit einer zusätzlichen korrespondierenden Verzahnung bzw. Kreuzverzahnung 1412; 14022 versehen. Die kreuzförmige Gestaltung ist durch Kreuze in den Figuren angedeutet. Die Verzahnungen weisen jeweils von den Flanschoberflächen weg und greifen ineinander formschlüssig ein, wenn Rotormast-/Zahnradringflansch 141 und Innenflansch 1402 miteinander verschraubt werden. Neben einer grossflächigen Drehmomentübertragung durch Kontakt des Rotormast-/Zahnradringflansches 141 mit dem Innenflansch 1402 des Zahnradringmitnehmers 140 sichert die Kreuzverzahnung beidseitig den Sitz der Kontaktflächen der Flansche.

Das hier gezeigte Helikoptergetriebe 1 weist vier ortsfeste rotierbare Planetenradträger 11 auf, dessen Planetenräder 111 den Zahnradring 12 zu rotieren vermögen. Hier sind sämtliche Radiallager 113, 130, 172, 151 in Form von Kegelrollenlagern ausgeführt. Insbesondere sollten die Planetenradträgerlager 113 in Form von Kegelrollenlagern ausgeführt sein, da dies zur Erreichung vergrösserter Wartungsintervalle bzw. Schmiermittelnachführintervalle führt.

Bevorzugt sind die Wälzkörper der Kegelrollenlager aus Keramik, insbesondere aus Siliciumnitrid oder Zirkondioxid hergestellt. Wie Versuche gezeigt haben muss die Schmierung weniger oft nachgeführt werden, wenn derartige Kegelrollenlager verwendet werden. Auch die Abnutzung der Kegelrollenlager war im Betrieb weniger stark.

Optional kann der Lagermast 13 ausserhalb des Getriebegehäuses 10 antriebsstrangseitig an der nicht dargestellten Helikoptertragstruktur befestigt werden. Dies ist möglich, da der Lagermast 13 orts- und drehfest verbleibt.

Durch die vollständige Hohlkörperausführung des Lagermastes 13 und des Rotormastes 14 können eine Verkabelung und/oder Steuerstangen durch das Helikoptergetriebe 1 vollständig durchquerend durchgeführt werden. Damit ist eine kompaktere Bauart erreichbar.

Gemäss einer weiteren bevorzugten Ausführungsform des erfindungsmässen Helikopterrotorgetriebes 1 nach Fig.6 kann der Lagermast 13 zweiteilig ausgestaltet sein. Ein erstes Lagermastelement 132 ist antriebsstrangseitig angeordnet und das Lagermastelement 132 ist zumindest abschnittsweise von einem zweiten Lagermastelement 133 aufgenommen. Das erste Lagermastelement 132 kann als Getriebewelle aufgefasst werden, um welches das Antriebszahnrad 16 sowie das mit dem Antriebszahnrad 16 verbundene Sonnenrad 17 rotierbar gelagert ist. Wie in Fig.6 ersichtlich sind hier die Sonnenradlager 172 zwischen Getriebegehäuse 10 und Sonnenrad 17 angeordnet und dadurch das Sonnenrad 17 rotierbar um das Lagermastelement 132 des Lagermasts 13 gelagert.

Das zweite Lagermastelement 133 des Lagermasts 13 ist hier von der Anstriebsstrangseite in Richtung Rotorseite verjüngend ausgestaltet, wodurch während der Montage das zweite Lagermastelement 133 von der Antriebsstrangseite durch den zentrischen Hohlraum des Getriebegehäuse 10 in Richtung Rotorseite eingelassen wird. Im Weiteren ist hier das zweite Lagermastelement 133 im Wesentlichen durch eine formschlüssiges Tragelement 134 in Form einer Hülse im Getriebegehäuse 10 befestigbar.
Gemäss der hier in Fig.6 gezeigten, weiteren bevorzugten Ausführungsform ist beispielhaft der Rotormast 14 und der Zahnradringmitnehmer 140 als ein einziges einstückiges Bauteil gefertigt.

### Bezugszeichenliste

- 1: Helikopterrotorgetriebe
10 Getriebegehäuse
   100 Getriebegehäusebefestigung
   101 Gehäusedeckel
11 Planetenradträger
P Planetenradachse
   111 Planetenrad (Aussenzahnrad)
      1111 Aussenverzahnung
   112 Antriebsplanetenrad
   113 Planetenradträgerlager
12 Zahnradring/ innenverzahntes Hohlrad
   120 Innenverzahnung
   121 Befestigungsmittel
13 Lagermast (örtlich fix, nicht drehbar)
   130 Lager zwischen Lagermast und Rotormast
   131 Hohlraum
   132 Erstes Lagermastelement
   **133 Zweites Lagermastelement**
   **134 Formschlüssiges Tragelement**
14 Rotormast
   140 Zahnradringmitnehmer
      1401 Aussenflansch
         14011 Durchgangslöcher
      1402 Innenflansch
         14021 Durchgangslöcher
         14022 Verzahnung
   141 Rotormast-/Zahnradringflansch
      1411 Sackloch
      1412 Verzahnung
   142 Rotorkoppelflansch
15 Antriebsstrang
   150 Antriebsstrangzahnrad
   151 Antriebsstranglager (Kugelgelagert)
16 Antriebszahnrad (rotiert, örtlich fixiert, bewegt Zahnradring, Kegelrad)
17 Sonnenrad (verbunden mit Antriebszahnrad)
   170 Rohrabschnitt
   171 Aussenverzahnung
   172 Sonnenradlager
- Z: zentrische Achse

## Patentansprüche

1. Helikopterrotorgetriebe (1) mit einem Getriebegehäuse (10), in welchem mindestens ein zentrales Antriebszahnrad (16) von mindestens einem Antriebsstrang (15) rotierbar gelagert ist, wobei durch das Antriebszahnrad (16) indirekt eine Mehrzahl von Planetenrädern (111) auf zugehörigen Planetenradachsen (P) definierenden Planetenradträgern (11) angeordnet rotierbar gelagert sind, wodurch ein rotierbarer Rotormast (14) um eine zentrische Achse (Z) mittels Helikoptergetriebes (1) rotierbar antreibbar ist,
das Helikopterrotorgetriebe (1) einen zentralen Hohlraum aufweist, in welchem ein örtlich fixierter und drehgesicherter Lagermast (13) verläuft, welcher das Getriebegehäuse (10) mindestens teilweise in Richtung der zentrischen Achse (Z) durchsetzend gehalten ist, wobei das zentrale Antriebszahnrad (16) auf den Lagermast (13) rotierbar gelagert ist und mittels eines mit dem Antriebsrad (16) verbundenen Sonnenrads (17) eine Rotation von Antriebsplanetenrädern (112) an einer dem Antriebszahnrad (16) zugewandten Seite der Planetenradträger (11) um die Planetenradachsen (P) erreichbar ist,
**dadurch gekennzeichnet, dass**
die Antriebsplanetenräder (112) jeweils parallel zu und drehfest mit den zugehörigen Planetenrädern (111) angeordnet sind,
wobei über eine Wirkverbindung zwischen einem um die zentrische Achse (Z) rotierbaren innenverzahnten Zahnradring (12) und ortsfest gelagerte um ihre Planetenradachse (P) rotierbare, vom Zahnradring (12) umschlossene Planetenräder (111) der Zahnradring (12) derart rotierbar ist, so dass der Rotormast (14) mittels eines am Zahnradring (12) und am Rotormast (14) befestigten Zahnradringmitnehmers (140) in Rotation versetzbar ist.

2. Helikopterrotorgetriebe (1) nach Anspruch 1, wobei der örtlich fixierte und drehgesicherte Lagermast (13) das Getriebegehäuse (10) vollständig querend in Richtung der zentrischen Achse (Z) durchsetzt und Lagermast (13) und Rotormast (14) konzentrisch zueinander angeordnet sind.

3. Helikopterrotorgetriebe (1) nach einem der vorhergehenden Ansprüche, wobei der Lagermast (13) und der Rotormast (14) jeweils als Hohlkörper mit einer zentrischen Öffnung ausgestaltet sind, sodass Bauteile, wie Steuerstangen und/oder Verkabelung den Lagermast (13) und den Rotormast (14) in Richtung zentrischer Achse (Z) vollständig durchquerend anordbar sind.

4. Helikopterrotorgetriebe (1) nach einem der vorhergehenden Ansprüche, wobei der Lagermast (13) von der Rotorseite in Richtung Antriebsstrangseite verjüngend ausgestaltet in den zentrischen Hohlraum des Getriebegehäuses (10) eingelassen und befestigt ist.

5. Helikopterrotorgetriebe (1) nach einem der vorhergehenden Ansprüche, wobei die Antriebszahnräder (16) mittels der Planetenradträger (11) parallel zu den Planetenrädern (111) beabstandet um die Planetenradachse (P) rotierbar angeordnet sind.

6. Helikopterrotorgetriebe (1) nach einem der vorhergehenden Ansprüche, wobei der Zahnradringmitnehmer (140) mittels eines Aussenflansches (1401) am Zahnradring (12) und eines Innenflansches (1402) an einem Rotormast-/Zahnradringflansch (141) des Rotormastes (14) befestigbar ist.

7. Helikopterrotorgetriebe (1) nach Anspruch 6, wobei die in Kontakt zu bringenden Flächen des Rotormast-/Zahnradringflansches (141) und des Innenflansches (1402) jeweils mit einer korrespondierenden Verzahnung bzw. Kreuzverzahnung (1412; 14022) versehen sind, wodurch eine formschlüssige Verbindung erreicht wird.

8. Helikopterrotorgetriebe (1) nach einem der vorhergehenden Ansprüche, wobei das Getriebegehäuse (10) mittels eines Gehäusedeckels (101) den Zahnradringmitnehmer (140) umhüllend verschliessbar ist, wobei der Gehäusedeckel (101) am Getriebegehäuse (10) befestigt und rotormastseitig nicht befestigt ist.

9. Helikopterrotorgetriebe (1) nach einem der vorhergehenden Ansprüche, wobei die Planetenradträgerlager (113) in Form von Kegelrollenlagern ausgeführt sind.

10. Helikopterrotorgetriebe (1) nach Anspruch 9, wobei auch die anderen Radiallager, die Lager (130) zwischen Lagermast (13) und Rotormast (14), die Sonnenradlager (172), sowie die Antriebsstranglager (151) in Form von Kegelrollenlagern ausgeführt sind.

11. Helikopterrotorgetriebe (1) nach einem der Ansprüche 9 bis 10, wobei die Wälzkörper der Kegelrollenlager aus Keramik, insbesondere aus Siliciumnitrid, Siliciumcarbid oder Zirkondioxid bestehen.

## Claims

1. A helicopter rotor transmission (1) with a transmission housing (10) in which at least one central drive gear (16) is mounted such that it can be rotated by at least one drive train (15), wherein by means of the gear ring (16), indirectly a plurality of planetary gears (111) arranged on planetary gear carriers (11) defining respective planetary gear axes (P) are mounted such that they can rotate, whereby a rotatable rotor mast (14) can be rotatably driven about a central axis (Z) by means of a helicopter transmission (1),
the helicopter rotor transmission (1) has a central cavity, in which runs a locationally and rotationally fixed bearing mast (13), which is held passing through the gear housing (10) at least partially in the direction of the central axis (Z), wherein the central drive gear (16) is mounted on the bearing mast (13) such that it can rotate, and by means of a sun wheel (17) connected with the drive gear (16), a rotation of planetary drive gears (112) about the planetary gear axes (P) can be achieved on a side of the planetary gear carriers (11) facing the drive gear (16),
**characterised in that**,
the planetary drive gears (112) are in each case arranged parallel to and rotationally fixed with the planetary gears (111), wherein
by way of an operative connection between an internally toothed gear ring (12) that can rotate about the central axis (Z) and planetary gears (111), surrounded by the gear ring (12), and mounted in a fixed manner such that they can rotate about their planetary gear axes (P), the gear ring (12) can be rotated such that the rotor mast (14) can be set in rotation by means of a gear ring driver (140) attached to the gear ring (12) and the rotor mast (14).

2. The helicopter rotor transmission (1) in accordance with claim 1, wherein the locationally and rotationally fixed bearing mast (13) passes through the transmission housing (10), completely crossing the latter in the direction of the central axis (Z), and the bearing mast (13) and rotor mast (14) are arranged concentrically relative to one another.

3. The helicopter rotor transmission (1) in accordance with one of the preceding claims, wherein the bearing mast (13) and the rotor mast (14) are in each case configured as a hollow body with a central opening, such that components, such as control rods and/or cabling can be arranged passing completely between the bearing mast (13) and the rotor mast (14) in the direction of the central axis (Z).

4. The helicopter rotor transmission (1) in accordance with one of the preceding claims, wherein the bearing mast (13), configured so as to taper from the rotor side in the direction towards the drive train side, is inserted into the central cavity of the transmission housing (10) and attached.

5. The helicopter rotor transmission (1) in accordance with one of the preceding claims, wherein by means of the planetary gear carriers (11) the drive gears (16) are arranged such that they can rotate parallel to the planetary gears (111), spaced apart about the planetary gear axis (P).

6. The helicopter rotor transmission (1) in accordance with one of the preceding claims, wherein the gear ring driver (140) can be attached by means of an outer flange (1401) on the gear ring (12) and an inner flange (1402) on a rotor mast/gear ring flange (141) of the rotor mast (14).

7. The helicopter rotor transmission (1) in accordance with claim 6, wherein the surfaces of the rotor mast/gear ring flange (141) and the inner flange (1402) that are to be brought into contact, are each provided with corresponding toothing or cross-toothing (1412; 14022), whereby a form-fit connection is achieved.

8. The helicopter rotor transmission (1) in accordance with one of the preceding claims, wherein the transmission housing (10) can be closed by means of a housing cover (101) surrounding the gear ring driver (140), wherein the housing cover (101) is attached to the transmission housing (10) and is not attached on the rotor mast side.

9. The helicopter rotor transmission (1) in accordance with one of the preceding claims, wherein the planetary gear carrier bearings (113) are embodied in the form of tapered roller bearings.

10. The helicopter rotor transmission (1) in accordance with claim 9, wherein the other radial bearings, the bearings (130) between bearing mast (13) and rotor mast (14), the sun wheel bearings (172), together with the drive train bearings (151), are also embodied in the form of tapered roller bearings.

11. The helicopter rotor transmission (1) in accordance with one of the claims 9 to 10, wherein the rolling elements of the tapered roller bearings are made from ceramic, in particular from silicon nitride, silicon carbide, or zirconium dioxide.

## Revendications

1. Entraînement de rotor d'hélicoptère (1), pourvu d'une boîte de transmission (10) dans laquelle au moins un pignon d'entraînement (16) central d'au moins une chaîne cinématique (15) est logé en rotation, par le pignon d'entraînement (16) étant indirectement logée en rotation une pluralité d'engrenages planétaires (111), placés sur des supports d'engrenages planétaires (11) définissant des axes (P) d'engrenages planétaires associés, suite à quoi un mât de rotor (14) rotatif est susceptible d'être entraîné en rotation autour d'un axe (Z) central au moyen d'un entraînement d'hélicoptère (1),
l'entraînement de rotor d'hélicoptère (1) comportant une cavité centrale, dans laquelle s'écoule un mât de support (13) fixé localement et bloqué en rotation, lequel maintient au moins partiellement en le traversant la boîte de transmission (10) dans la direction de l'axe central (Z), le pignon d'entraînement (16) central étant logé en rotation sur le mât de support (13) et au moyen d'une roue solaire (17) reliée avec le pignon d'entraînement (16), une rotation d'engrenages planétaires d'entraînement (112) autour des axes (P) d'engrenages planétaires sur un côté des supports d'engrenages planétaires (11) qui fait face au pignon d'entraînement (16) pouvant être obtenue,
**caractérisé en ce que**
les engrenages planétaires d'entraînement (112) sont placés chacun à la parallèle des engrenages planétaires (111) associés et de manière solidaire en rotation avec ceux-ci,
par une liaison active entre une bague d'engrenage (12) à denture intérieure rotative autour de l'axe central (Z) et des engrenages planétaires (111) logés de manière stationnaire, rotatifs autour de leur axe (P) d'engrenage planétaire, entourés par la bague d'engrenage (12), la bague d'engrenage (12) étant rotative de telle sorte que le mât de rotor (14) soit susceptible d'être amené en rotation au moyen d'un entraîneur de bague d'engrenage (140) fixé sur la bague d'engrenage (12) et sur le mât de rotor (14).

2. Entraînement de rotor d'hélicoptère (1) selon la revendication 1, le mât de support (13) fixé localement et bloqué en rotation traversant la boîte de transmission (10) dans la complète transversale dans la direction de l'axe central (Z) et le mat de support (13) ainsi que le mât de rotor (14) étant placés de manière concentrique l'un par rapport à l'autre.

3. Entraînement de rotor d'hélicoptère (1) selon l'une quelconque des revendications précédentes, le mât de support (13) et le mât de rotor (14) étant conçus chacun sous la forme d'un corps creux pourvu d'un orifice central, de telle sorte que des éléments constitutifs, tels que des barres de commande et/ou des câblages puissent être placés en traversant totalement le mât de support (13) et le mât de rotor (14) dans la direction de l'axe central (Z).

4. Entraînement de rotor d'hélicoptère (1) selon l'une quelconque des revendications précédentes, le mât de support (13), conçu en se rétrécissant en partant du côté rotor dans la direction du côté chaîne cinématique étant encastré et fixé dans la cavité centrale de la boîte de transmission (10).

5. Entraînement de rotor d'hélicoptère (1) selon l'une quelconque des revendications précédentes, les pignons d'entraînement (16) étant placés au moyen des supports d'engrenages planétaires (11), à la parallèle des engrenages planétaires (111) en étant rotatifs avec un écart autour de l'axe (P) d'engrenage planétaire.

6. Entraînement de rotor d'hélicoptère (1) selon l'une quelconque des revendications précédentes, l'entraîneur de bague d'engrenage (140) étant susceptible d'être fixé au moyen d'une bride extérieure (1401) sur la bague d'engrenage (12) et d'une bride intérieure (1402) sur une bride de mât de rotor/de bague d'engrenage (141) du mât de rotor (14).

7. Entraînement de rotor d'hélicoptère (1) selon la revendication 6, les surfaces devant être amenées en contact de la bride de mât de rotor/de bague d'engrenage (141) et de la bride intérieure (1402) étant munies chacune d'une denture ou denture croisée (1412 ; 14022) correspondante, suite à quoi une liaison par complémentarité de forme est obtenue.

8. Entraînement de rotor d'hélicoptère (1) selon l'une quelconque des revendications précédentes, la boîte de transmission (10) pouvant se fermer au moyen d'un couvercle de boîte (101) en entourant l'entraîneur de bague d'engrenage (140), le couvercle de boîte (101) étant fixé sur la boîte de transmission (10) et n'étant pas fixée côté mat du rotor.

9. Entraînement de rotor d'hélicoptère (1) selon l'une quelconque des revendications précédentes, les paliers de supports de roues planétaires (113) étant réalisés sous la forme de paliers à roue conique.

10. Entraînement de rotor d'hélicoptère (1) selon la revendication 9, également les autres paliers radiaux, les paliers (130) entre le mât de support (13) et le mât de rotor (14), les paliers de la roue solaire (172), ainsi que les paliers de la chaîne cinématique (151) étant réalisés sous la forme de paliers à roue conique.

11. Entraînement de rotor d'hélicoptère (1) selon l'une quelconque des revendications 9 et 10, les roulements des paliers à roue conique étant constitués de céramique, notamment de nitrure de silicium, de carbure de silicium ou de dioxyde de zirconium.
